**Europäisches Patentamt**

**European Patent Office**

**Office européen des brevets**

(19)

(11) **EP 0 716 128 B1**

(12) **EUROPÄISCHE PATENTSCHRIFT**

(45) Veröffentlichungstag und Bekanntmachung des Hinweises auf die Patenterteilung:
**04.12.2002  Patentblatt 2002/49**

(51) Int Cl.7: **C08L 83/04**

(21) Anmeldenummer: **95116093.6**

(22) Anmeldetag: **12.10.1995**

(54) **Wasserbasierende organopolysiloxanhaltige Zusammensetzungen, Verfahren zu deren Herstellung und deren Verwendung**

Waterborne organopolysiloxane-containing compositions, process for their preparation and their use

Compositions aqueuses contenant des organopolysiloxanes, leur procédé de préparation et utilisation

(84) Benannte Vertragsstaaten:
**AT BE CH DE DK ES FR GB IT LI NL SE**

(30) Priorität: **09.12.1994  DE 4443825**

(43) Veröffentlichungstag der Anmeldung:
**12.06.1996  Patentblatt 1996/24**

(73) Patentinhaber: **Degussa AG**
**40474 Düsseldorf (DE)**

(72) Erfinder:
• **Standke, Burkhard, Dr.**
  **D-79540 Lörrach (DE)**
• **Fliedner, Christine, Dr.**
  **D-53127 Bonn (DE)**
• **Frings, Albert, Dr.**
  **D-79618 Rheinfelden (DE)**

• **Horn, Michael, Dr.**
  **D-79618 Rheinfelden (DE)**
• **Kötszch, Hans-Joachim, Dr.**
  **D-79618 Rheinfelden (DE)**
• **Monkiewicz, Jaroslaw, Dr.**
  **D-79618 Rheinfelden (DE)**
• **Srebny, Hans-Günther, Dr.**
  **D-48249 Dülmen (DE)**

(56) Entgegenhaltungen:
**EP-A- 0 138 192        EP-A- 0 590 270**
**US-A- 5 051 129**

• **PATENT ABSTRACTS OF JAPAN vol. 3, no. 142 (C-65), 24.November 1979 & JP 54 119597 A (NIPPON GENSHIRYOKU KENKYUSHO), 17.September 1979,**

**Beschreibung**

Die Erfindung betrifft wasserbasierende Organopolysiloxan-haltige Zusammensetzungen, ein Verfahren zu deren Herstellung sowie deren Verwendung. Die erfindungsgemäßen Organopolysiloxan-haltigen Zusammensetzungen sind im wesentlichen frei von Lösemitteln. Unter lösemittelfreien Zusammensetzungen sind hier solche zu verstehen, die keine aliphatischen oder aromatischen Kohlenwasserstoffe, Halogenkohlenwasserstoffe, Glykole, Glykolether, Ether, Ketone, Ester, Amide und andere Stickstoff-Verbindungen sowie Schwefel- und Nitroverbindungen auf rein organischer Basis sowie Protonen-(bzw. Wasserstoff-)freie Lösemittel in Anteilen von mehr als 10 Gew.-ppm enthalten. Hingegen werden Protonen-haltige Agenzien, wie Wasser, anorganische oder organische Säuren, und Alkohole, wie Methanol, Ethanol, n- und i-Propanol sowie höhere Alkohole in dieser Reihe, nachfolgend nicht als organische Lösemittel angesehen.

Mineralische Baustoffe - wie beispielsweise Ziegel, Beton, Kalksandstein, Mörtel - unterliegen gewöhnlich der Verwitterung. Aus diesem Grunde werden in der Regel zur Vermeidung solcher Vorgänge Schutzanstriche auf die Oberfläche aufgebracht.

Eine andere günstige Methode ist die Oberflächenimprägnierung. Hierbei dringt das Hydrophobierungsmittel in eine poröse Struktur ein. Dadurch wird neben einem Schutz der Oberfläche auch eine gewisse Tiefenwirkung erzielt. Da ferner keine dampfdichte Schicht gebildet wird, ist die gewöhnlich geforderte Wasserdampfdurchlässigkeit gegeben. Die Tiefenwirkung ist natürlich durch die Eindringfähigkeit des flüssigen Hydrophobierungsmittels in einen porösen Stoff limitiert.

Als Kriterien für die Güte der wasserabstoßenden Wirkung von Hydrophobierungsagenzien gelten im allgemeinen der "Abperleffekt" nach der Imprägnierung, die Eindringtiefe des hydrophobierenden Agens in z. B. poröse mineralische Baustoffe sowie die Reduktion der Wasseraufnahme nach Behandlung der Materialien mit der Hydrophobierungslösung. Zusätzlich soll die Oberfläche der Materialien nach der Imprägnierung gegenüber ihrem ursprünglichen Erscheinungsbild nicht verändert sein.

Organosilane der allgemeinen Formel $R^0$ - Si $(OR^1)_3$, mit $R^0$ als organischem Rest und $R^1$ als Methyl- bzw. Ethyl-Rest, finden vielfältige Anwendungen, z. B. als Haftvermittler, Trennmittel, Rheologieverbesserer, Vernetzer aber auch als Hydrophobierungsmittel.

Aus ökologischen, arbeitssicherheitstechnischen und ökonomischen Gründen geht man immer mehr dazu über, ihre Applikation in wäßriger Form vorzunehmen. Hierbei treten in der Regel folgende Probleme auf:

-    Durch Hydrolyse werden Alkohole freigesetzt:

$$R^0\text{-Si}(OR^1)_3 + 3\,H_2O \rightarrow R^0\text{-Si(OH)}_3 + 3\,R^1OH$$

Freie Alkohole erniedrigen den Flammpunkt der Anwendungslösung, so daß explosionsgeschützte Maschinen und Spezialgeräte für die notwendigen Verarbeitungsschritte eingesetzt werden müssen. Aus toxikologischen Gründen müssen die mit dem Umgang betrauten Mitarbeiter zusätzlich geschult und geschützt werden. Ferner kann die Entsorgung der gebrauchten Anwendungslösung aufgrund der Hydrolysealkohole Schwierigkeiten bereiten. Spezielle Abwasserkläranlagen sowie Anlagen zur Abgas- bzw. Abluftnachbehandlung werden benötigt.

-    Das in Wasser zu applizierende Organosilan ist nicht wasserlöslich:

$$R^0\text{-Si}(OR^1)_3 + 1{,}5\,H_2O \rightarrow R^0\text{-SiO}_{1{,}5} + 3\,R^1OH$$

Das danach gebildete Hydrolysat $R\text{-SiO}_{1{,}5}$ fällt als polymeres Silikonharz aus dem Reaktionsgemisch aus, so daß es für die gewünschte Anwendung nicht mehr zur Verfügung steht. Organosilane mit sehr stark hydrophobem Charakter, wie z. B. Alkylalkoxysilane, insbesondere mit langem oder verzweigtem Kohlenstoffgerüst, hydrolysieren zwar nur sehr langsam, sind aber in Wasser nicht löslich.

Um die bekannten, zuvor beschriebenen Nachteile zu mildern, wurden in der zurückliegenden Zeit verschiedenste Verfahren angeregt:

Einige Organosilane, wie z. B. Aminoalkylalkoxysilane, sind zwar wasserlöslich, diese besitzen aber einen nur schwach hydrophoben Charakter. Eine Verbesserung der hydrophobierenden Wirkung ist hier wünschenswert. Die Maßnahme der destillativen Entfernung von Hydrolysealkoholen während der Synthese für die Herstellung von Organosilan-Zubereitungen aus wasserlöslichen Organosilanen, wie z. B. aus 3-Aminopropyltriethoxysilan, ist bekannt. Wasserbasierende Aminosilansysteme mit deutlichem Alkoholanteil, aber ansonsten lösemittelfrei, sind auf diese Weise zugänglich und beispielsweise in Form von DYNASYLAN® 1151 marktgängig.

In der europäischen Patentanmeldung mit dem Titel "Method for preparation of stable water-borne silane compositions EP0675128 wird die Modifizierung derartiger wasserbasierender Organosilan-Zubereitungen mit geringen Mengen an sich nicht wasserlöslichen Organosilanen, wie beispielsweise Methyltrimethoxysilan oder Vinyltrimethoxysilan, beschrieben. Nach diesem Verfahren ist ein molares Verhältnis der nicht wasserlöslichen Komponente zu der wasserlöslichen Komponente von 1 : 2,5 erreichbar. Die Anwendungseigenschaften entsprechen im wesentlichen denen der zuvor genannten, wasserbasierenden Organosilan-Zubereitungen. Nicht zugänglich nach diesem Verfahren sind wäßrige Lösungen mit noch höheren Anteilen nicht wasserlöslicher Organosilane, beispielsweise Alkylalkoxysilane wie Methyl-, Propyl- oder Isobutyltrimethoxysilan.

Bei der ebenfalls zum Stand der Technik gehörenden Emulsionsmethode wird das an sich nicht wasserverträgliche Organosilan an flüssiges, nicht wasserlösliches Silikonharz unter Zuhilfenahme von Emulgatoren in Wasser emulgiert (EP-A2 0 442 098, EP-B1 0 358 652, US 4 620 878). Nachteilig ist hier, daß die Produkte merkliche Anteile Tenside als Emulgatoren enthalten sowie erhebliche Mengen Alkohol freisetzen können.

Die Zubereitung von Silan-Kombinationen in Wasser wird in der US-Patentschrift 5 073 195 offenbart. Die Silan-Zubereitungen werden aus einem nicht wasserlöslichen Alkyltrialkoxysilan und einem wasserlöslichen Silan, wie z. B. einem Aminoalkylalkoxysilan, in einem molaren Verhältnis zwischen 1 : 2 bis 3 : 1 hergestellt. Wie den Beispielen der US-Patentschrift zu entnehmen ist, erfolgt die Herstellung der Zubereitungen durch eine unterstöchiometrische Hydrolyse des Silangemisches und Strippen der Reaktionsmischung bei 60 °C unter vermindertem Druck, für nachfolgende Anwendungen werden so erhaltene Silan-Zubereitungen auch mit Wasser verdünnt. Durch das Verdünnen mit Wasser erfolgt aber die Abspaltung der bei der unvollständigen Hydrolyse verbleibenden Alkoxygruppen in Form der entsprechenden Alkohole. Die hier offenbarten Silan-Cohydrolysate enthalten somit freie Alkohole in deutlichen Mengen und können darüber hinaus weitere Mengen Alkohol durch Hydrolyse freisetzen, wodurch die Anwendungseigenschaften der Produkte nachteilig beeinflußt werden.

Der Erfindung liegt daher die Aufgabe zugrunde, im wesentlichen lösemittelfreie Organosilan-Zubereitungen auf Wasser-Basis zu entwickeln, die einen möglichst geringen Gehalt an freien Alkoholen aufweisen, einen möglichst hohen Flammpunkt besitzen und beim Verdünnen mit Wasser im wesentlichen keine Alkohole durch Hydrolyse freisetzen.

Es wurde nun überraschenderweise gefunden, daß durch Mischen von Aminoalkylalkoxysilanen der allgemeinen Formel I mit Alkyltrialkoxysilanen und/oder Dialkyldialkoxysilanen der allgemeinen Formeln II und III, Versetzen des Gemisches mit Wasser, Einstellen des pH-Wertes der Reaktionsmischung auf einen Wert zwischen 1 und 8 sowie Entfernen des vorhandenen und/oder bei der Umsetzung entstandenen Alkohols wasserbasierende Organopolysiloxan-haltige Zusammensetzungen zugänglich sind. Diese sind im wesentlichen frei von organischen Lösemitteln. Überraschend ist die Erfindung aus dem Grunde, da so hergestellte Organopolysiloxan-haltigen Zusammensetzungen klare, stabile Lösungen sind, die einen Flammpunkt von deutlich mehr als 80 °C besitzen und auch beim Verdünnen mit Wasser im wesentlichen keine Alkohole durch Hydrolyse freisetzen.

Gegenstand der vorliegenden Erfindung sind daher wasserbasierende Organopolysiloxan-haltige Zusammensetzungen, die im wesentlichen frei von organischen Lösemitteln sind, einen Flammpunkt von mehr als 80 °C besitzen, bei Verdünnen mit Wasser im wesentlichen keine Alkohole durch Hydrolyse freisetzen, wobei der Alkoholgehalt in den Zusammensetzungen weniger als 2 Gew.-% beträgt, und erhältlich sind durch

- Mischen wasserlöslicher Aminoalkylalkoxysilane der allgemeinen Formel I

$$R - Si\,(R^1)_y\,(OR^{1^*})_{3-y} \qquad\qquad (I)$$

mit nicht wasserlöslichen Alkyltrialkoxysilanen der allgemeinen Formel II

$$R^2 - Si\,(OR^{1^{**}})_3 \qquad\qquad (II)$$

und/oder nicht wasserlöslichen Dialkyldialkoxysilanen der allgemeinen Formel III

$$AA' - Si\,(OR^{1^{***}})_2 \qquad\qquad (III)$$

und/oder Mischungen aus-nicht wasserlöslichen Alkyltrialkoxysilanen und Dialkyldialkoxysilanen der allgemeinen Formeln II und III,

wobei R eine aminofunktionelle organische Gruppe der allgemeinen Formel IV

$$[Z_{(f+g+h)}]^{(f+g+h)-}[NH_{2+f}(CH_2)_b(NH_{g+1})_c(CH_2)_d(NH_{h+1})_e(CH_2)_i]^{(f+g+h)+} - \qquad (IV),$$

worin $0 \leq b \leq 3$, $0 \leq d \leq 3$, $0 \leq i \leq 3$, $0 \leq f \leq 1$, $0 \leq g \leq 1$, $0 \leq h \leq 1$, $0 \leq c \leq 1$, $0 \leq e \leq 1$, $b + d + i \neq 0$, falls $b = 0$ dann $c = 0$, falls $d = 0$ dann $e = 0$, falls $i = 0$ dann $e = 0$, falls $d = i = 0$ dann $c = 0$, und Z ein einwertiger anorganischer oder organischer Säure-Rest ist,

$R^1$, $R^{1*}$, $R^{1**}$ und $R^{1***}$ einen Methyl- oder Ethyl-Rest,
$R^2$ einen linearen oder cyclischen oder verzweigten Alkyl-Rest mit 1 bis 8 C-Atomen,
A einen unverzweigten oder verzweigte Alkyl-Rest mit 1 bis 3 C-Atomen und
A' einen unverzweigten oder verzweigte Alkyl-Rest mit 1 bis 3 C-Atomen darstellt und
$0 \leq y \leq 1$ ist,

- in dem molaren Verhältnis $0 < M/Q \leq 2$,
     wobei Q die Summe der Molzahlen der Aminoalkylalkoxysilane der allgemeinen Formel I und M die Summe der Molzahlen der Alkyltrialkoxysilane der allgemeinen Formel II und der Dialkyldialkoxysilane der allgemeinen Formel III ist,

- Versetzen des Gemisches mit Wasser,

- Einstellen des pH-Wertes der Reaktionsmischung auf einen Wert zwischen 1 und 8 und

- Entfernen des bereits vorhandenen und/oder bei der Umsetzung entstandepen Alkohols.

Nach gängigen Modelivorstellungen über monomere, ollgomere, polymere sowie copolymere Kondensationsprodukte können solche auch in einem wäßrigen System als Ergebnis einer Hydrolysereaktion nicht wasserlöslicher und wasserlöslicher Organosilane entstehen.

So können in den erfindungsgemäßen Organopolysiloxan-haltigen Zusammensetzungen z. B. lineare Cokondensate der allgemeinen Formel

$$H - O\,[[ - \underset{\underset{(OH)_{1-y}}{|}}{\overset{\overset{R}{|}}{Si}}(R^1)_y - O]_q\,[ - \underset{\underset{A'}{|}}{\overset{\overset{A}{|}}{Si}} - O]_a\,[ - \underset{\underset{OH}{|}}{\overset{\overset{R^2}{|}}{Si}} - O]_m]_x - H$$

und/oder cyclische Cokondensate der allgemeinen Formel

$$[[ - \underset{\underset{(OH)_{1-y}}{|}}{\overset{\overset{R}{|}}{Si}}(R^1)_y - O]_{q'}\,[ - \underset{\underset{A'}{|}}{\overset{\overset{A}{|}}{Si}} - O]_{a'}\,[ - \underset{\underset{OH}{|}}{\overset{\overset{R^2}{|}}{Si}} - O]_{m'}]_{x'}$$

und/oder lineare Kondensate der allgemeinen Formel

$$q''[H - O[ - \underset{\underset{(OH)_{1-y}}{|}}{\overset{\overset{R}{|}}{Si}}(R^1)_y - O]_{x''} - H]$$

und/oder lineare Kondensate der allgemeinen Formel

$$m''[H - O[ - \underset{\underset{OH}{|}}{\overset{\overset{R^2}{|}}{Si}} - O]_{x''} - H]$$

und/oder lineare Kondensate der allgemeinen Formel

$$a''[H - O[ - \underset{\underset{A'}{|}}{\overset{\overset{A}{|}}{Si}} - O]_{x''} - H]$$

und/oder cyclische Kondensate der allgemeinen Formel

$$q'''[ \quad [ - \underset{\underset{(OH)_{1-y}}{|}}{\overset{\overset{R}{|}}{Si}} (R^1)_y - O]_{x'''}  ]$$

und/oder cyclische Kondensate der allgemeinen Formel

$$m'''[ \quad [ - \underset{\underset{OH}{|}}{\overset{\overset{R^2}{|}}{Si}} - O]_{x'''}  ]$$

und/oder cyclische Kondensate der allgemeinen Formel

$$a'''[ \quad [ - \underset{\underset{A'}{|}}{\overset{\overset{A}{|}}{Si}} - O]_{x'''}  ]$$

und/oder Silanole der allgemeinen Formel

$$q''''[ R - Si (R^1)_y (OH)_{3-y}]$$

und/oder Silanole der allgemeinen Formel

$$m''''[ R^2 - Si (OH)_3]$$

und/oder Silanole der allgemeinen Formel

$$a''''[\, AA' - Si\, (OH)_2]$$

enthalten sein,
wobei R z. B. eine aminofunktionelle organische Gruppe der allgemeinen Formel

$$[Z_{(f+g+h)}]^{(f+g+h)-}\, [NH_{2+f}\, (CH_2)_b\, (NH_{g+1})_c\, (CH_2)_d\, (NH_{h+1})_e\, (CH_2)_i]^{(f+g+h)+}\, -\, ,$$

worin $0 \leq b \leq 3$, $0 \leq d \leq 3$, $0 \leq i \leq 3$, $0 \leq f \leq 1$, $0 \leq g \leq 1$, $0 \leq h \leq 1$, $0 \leq c \leq 1$, $0 \leq e \leq 1$, $b + d + i \neq 0$, falls $b = 0$ dann $c = 0$, falls $d = 0$ dann $e = 0$, falls $i = 0$ dann $e = 0$, falls $d = i = 0$ dann $c = 0$, und Z ein einwertiger anorganischer oder organischer Säure-Rest, wie z. B. Chlorid oder Nitrat oder Formiat oder Acetat, sein kann,
wobei

$R^1$ z. B. einen Methyl- oder Ethyl-Rest,
$R^2$ z. B. einen linearen oder cyclischen oder verzweigten Alkyl-Rest mit 1 bis 8 C-Atomen,
A z. B. einen unverzweigten oder verzweigte Alkyl-Rest mit 1 bis 3 C-Atomen und
A' z. B. einen unverzweigten oder verzweigte Alkyl-Rest mit 1 bis 3 C-Atomen darstellen kann,
$0 \leq y \leq 1$ sein kann,
x, x', x'', x''', x'''' in der Verteilung der Polymeren Werte von größer 4 besitzen können und

die Verhältniszahl M/Q z. B. zwischen 0 und 2 liegen kann,
worin

Q die Summe aus q + q'+ q''+ q'''+ q'''' und
M die Summe aus m + m'+ m''+ m'''+ m'''' + a + a' + a'' + a''' + a'''' und $0 < (m + m'+ m''+ m'''+ m'''')/(a + a'+ a''+ a'''+ a'''') < 10$ sein kann.

Ferner ist Gegenstand der vorliegenden Erfindung ein Verfahren zur Herstellung von Organopolysiloxan-haltigen Zusammensetzungen nach den Ansprüchen 1 bis 4, das dadurch gekennzeichnet ist, daß man

-   wasserlösliche Aminoalkylalkoxysilane der allgemeinen Formel I

$$R - Si\, (R^1)_y\, (OR^{1*})_{3-y} \tag{I}$$

mit nicht wasserlöslichen Alkyltrialkoxysilanen der allgemeinen Formel II

$$R^2 - Si\, (OR^{1**})_3 \tag{II},$$

und/oder nicht wasserlöslichen Dialkyldialkoxysilanen der allgemeinen Formel III

$$AA' - Si\, (OR^{1***})_2 \tag{III}$$

und/oder Mischungen aus nicht wasserlöslichen Alkyltrialkoxysilanen und Dialkyldialkoxysilanen der allgemeinen Formeln II und III,
wobei R eine aminofunktionelle organische Gruppe der allgemeinen Formel IV

$$[Z_{(f+g+h)}]^{(f+g+h)-}[NH_{2+f}(CH_2)_b(NH_{g+1})_c(CH_2)_d(NH_{h+1})_e(CH_2)_i]^{(f+g+h)+}\, - \tag{IV},$$

worin $0 \leq b \leq 3$, $0 \leq d \leq 3$, $0 \leq i \leq 3$, $0 \leq f \leq 1$, $0 \leq g \leq 1$, $0 \leq h \leq 1$, $0 \leq c \leq 1$, $0 \leq e \leq 1$, $b + d + i \neq 0$, falls b =

0 dann c = 0, falls d = 0 dann e = 0, falls i = 0 dann e = 0, falls d = i = 0 dann c = 0, und Z ein einwertiger anorganischer oder organischer Säure-Rest ist,

R$^1$, R$^{1*}$, R$^{1**}$ und R$^{1***}$ einen Methyl- oder Ethyl-Rest,
R$^2$ einen linearen oder cyclischen oder verzweigten Alkyl-Rest mit 1 bis 8 C-Atomen,
A einen unverzweigten oder verzweigte Alkyl-Rest mit 1 bis 3 C-Atomen und
A' einen unverzweigten oder verzweigte Alkyl-Rest mit 1 bis 3 C-Atomen darstellt und
$0 \leq y \leq 1$ ist,

- in dem molaren Verhältnis $0 < M/Q \leq 2$ mischt,
  wobei Q die Summe der Molzahlen der Aminoalkylalkoxysilane der allgemeinen Formel I und M die Summe der Molzahlen der Alkyltrialkoxysilane der allgemeinen Formel II und der Dialkyldialkoxysilane der allgemeinen Formel III ist,

- das Gemisch mit Wasser versetzt,

- den pH-Wert der Reaktionsmischung auf einen Wert zwischen 1 und 8 einstellt,

- den bereits vorhandenen und/oder bei der Umsetzung entstandenen Alkohol entfernt.

Beim erfindungsgemäßen Verfahren werden als nicht wasserlösliche Ausgangskomponeten vorzugsweise Mischungen aus Alkyltrialkoxysilanen der allgemeinen Formel II und Dialkyldialkoxysilanen der allgemeinen Formel III, die durch gleichzeitige Veresterung der entsprechenden Tri- und Dichlorsilane der allgemeinen Formeln V und VI

$$R^2 - Si\,Cl_3 \tag{V}$$

$$AA' - Si\,Cl_2 \tag{VI},$$

wobei R$^2$ einen linearen oder cyclischen oder verzweigten Alkyl-Rest mit 1 bis 8 C-Atomen, A einen unverzweigten oder verzweigte Alkyl- Rest mit 1 bis 3 C-Atomen und A' einen unverzweigten oder verzweigten Alkyl-Rest mit 1 bis 3 C-Atomen darstellt,
mit Methanol oder Ethanol hergestellt werden. Die Mischungen an sich können aber auch aus den reinen Einzelkomponenten, den Alkyltrialkoxy- und Dialkyldialkoxysilanen der allgemeinen Formeln II und III, durch Abmischen erhalten werden.

Gegenstand der vorliegenden Erfindung ist darüber hinaus die bevorzugte Verwendung der Organopolysiloxan-haltigen Zusammensetzungen auf Wasserbasis nach den Ansprüchen 1 bis 15 für die Hydrophobierung von Oberflächen, für die Hydrophobierung von mineralischen Baustoffen, für den Schutz von Bauten und Fassaden, für die Beschichtung von Glasfasern, für die Silanierung von Füllstoffen, als Haftvermittler, insbesondere für die Verbesserung der Haftung organischer Polymerer auf anorganischen Oberflächen, als Trennmittel, für die Verbesserung der rheologischen Eigenschaften, insbesondere von Dispersionen und Emulsionen, als Vernetzer, als Zusatzstoff für Farben und Lacke, für die Hydrophobierung von Textilien, Leder, Zellulose- und Stärkeprodukte.

Die erfindungsgemäßen Organopolysiloxan-haltigen Zusammensetzungen sind im wesentlichen frei von organischen Lösemitteln, können aber geringe Mengen an Alkoholen, insbesondere Methanol und/oder Ethanol, enthalten. Der Alkohol-Gehalt in den erfindungsgemäßen Organosiloxan-haltigen Zusammensetzungen beträgt vorzugsweise weniger als 2 Gew.-%, besonders vorzugsweise weniger als 0,5 Gew.-% und ganz besonders vorzugsweise weniger als 0,1 Gew.-%.

Die erfindungsgemäßen Organopolysiloxan-haltigen Zusammensetzungen weisen vorzugsweise einen pH-Wert zwischen 1 und 8, besonders vorzugsweise einen pH-Wert zwischen 3 und 6, ganz besonders vorzugsweise einen pH-Wert zwischen 3 und 5, auf. Geeigneterweise enthalten diese eine einwertige anorganische und/oder organische Säure und/oder deren Folgeprodukte. Unter Folgeprodukten versteht man hier Verbindungen wie Alkalihalogenide, insbesondere Natrium- oder Kaliumchlorid, Alkaliacetate, Alkaliformiate, Alkalinitrate oder Verbindungen der Aminogruppierungen in den Organopolysiloxanen mit anorganischen oder organischen Säureresten, wie sie der allgemeinen Formel IV zu entnehmen sind.

Bedingt durch eine vorteilhafte Teilmaßnahme bei der Herstellung können die erfindungsgemäßen Organopolysiloxan-haltigen Zusammensetzungen einen Entschäumer, vorzugsweise eine Silikonharz-Suspension, enthalten.

Das Verfahren zur Herstellung der erfindungsgemäßen Organosiloxan-haltigen Zusammensetzungen kann wie nachfolgend detailliert beschrieben durchgeführt werden:

Zunächst werden wasserlösliche Organosilane der allgemeinen Formel I mit nicht wasserlöslichen Alkyltrialkoxysilanen und/oder Dialkyldialkoxysilanen der allgemeinen Formeln II und III und/oder gesondert hergestellten Mischungen aus nicht wasserlöslichen Alkyltrialkoxysilanen und Dialkyldialkoxysilanen gemischt. Im allgemeinen versetzt man das Reaktionsgemisch mit Wasser, vorzugsweise mit 0,5 bis 10 Mole Wasser, besonders vorzugsweise mit 1 bis 5 Mole Wasser, pro Mol der eingesetzten Aminoalkylalkoxysilane der allgemeinen Formel I, der Alkyltrialkoxysilane der allgemeinen Formel II und/oder der Dialkyldialkoxysilane der allgemeinen Formel III. Die Wasserzugabe kann portionsweise mit zeitlichen Unterbrechungen erfolgen. Man kann den Vorgang der Wasserdosierung aber auch kontinuierlich mit zeitlichen Unterbrechungen durchführen oder die diskontinuierliche und kontinuierliche Vorgehensweise der Wasserdosierung miteinander in geeigneter Weise kombinieren. Man kann auch so vorgehen, daß man eine der obengenannten Organosilankomponenten vorlegt, die Wasserdosierung vornimmt, die andere Organosilankomponente nachfolgend zugibt und anschließend - soweit noch erforderlich - Wasser nachdosiert.

Mischungen aus nicht wasserlöslichen Alkyltrialkoxysilanen und/oder Dialkyldialkoxysilanen der allgemeinen Formeln II und III werden vorzugsweise durch gemeinsame Veresterung eines Gemisches aus den entsprechenden Alkyltrichlorsilanen der allgemeinen Formel V und Dialkyldichlorsilanen der allgemeinen Formel VI mit Alkoholen, vorzugsweise Methanol oder Ethanol, hergestellt. In an sich bekannter Weise wird das z. B. durch Abmischen von Alkyltrichlorsilanen und Dialkyldichlorsilanen vorbereitete Chlorsilangemisch mit einem Alkohol oder auch mehreren Alkoholen zu einem entsprechenden Rohalkylalkoxysilangemisch verestert. Dabei entstehender Chlorwasserstoff wird vorzugweise zum größten Teil aus dem Rohalkylalkoxysilangemisch ausgetrieben. Ferner kann das Rohalkylalkoxysilangemisch mit einer Alkalialkoholat-Lösung auf einen pH-Wert zwischen 6 und 9, vorzugsweise auf einen pH-Wert zwischen 7 und 8, eingestellt werden. Als Alkalialkoholat-Lösungen eignen sich z. B. Natrium- oder Kaliummethanolat sowie Natrium- oder Kaliummethanolat auf Ethanol- oder Methanol-Basis, es können aber auch andere Alkoholate und Alkohole, wie z. B. n-Propanol, i-Propanol, n-Butanol, sek.-Butanol, tert.-Butanol sowie die daraus ableitbaren Alkoholate, eingesetzt werden. Das Rohalkylalkoxysilangemisch wird geeigneterweise filtriert. Ein so erhaltenes Rohalkylalkoxysilangemisch kann ohne weitere Aufarbeitung für das erfindungsgemäße Verfahren zur Herstellung von Organopolysiloxan-haltigen Zusammensetzungen eingesetzt werden.

Bei dem erfindungsgemäßen Verfahren wird der pH-Wert der im allgemeinen wasserlösliche und nicht wasserlösliche Organosilane der allgemeinen Formeln I, II und III enthaltenden Reaktionsmischung geeigneterweise auf einen Wert zwischen 1 und 8, vorzugsweise auf einen Wert zwischen 3 und 6, besonders vorzugsweise auf einen Wert zwischen 3 und 5, eingestellt. Die Dosierung der Säure kann zusammen mit der oben beschriebenen Wasserdosierung oder auch separat erfolgen. Dem Reaktionsgemisch wird im allgemeinen eine anorganische oder organische Säure, vorzugsweise eine einbasige Säure, besonders vorzugsweise Salpetersäure oder Salzsäure oder Essigsäure oder Ameisensäure, zugegeben.

Die Umsetzung wird im allgemeinen in einem Temperaturbereich zwischen 0 und 100 °C, vorzugsweise in einem Temperaturbereich zwischen 10 und 80 °C und besonders vorzugsweise zwischen 20 und 60 °C, durchgeführt. Geeigneterweise erfolgt die Umsetzung unter Rühren.

Der bereits vorhandene und/oder bei der Umsetzung entstandene Alkohol wird im allgemeinen aus dem Reaktionsgemisch entfernt. Vorzugsweise wird der bereits vorhandene und/oder bei der Umsetzung entstandene Alkohol destillativ entfernt und dabei gleichzeitig Wasser in dem Maße zugegeben, wie Alkohol aus dem Reaktionsgemisch entfernt wird. Die destillative Abtrennung des Alkohols wird vorzugsweise unter vermindertem Druck durchgeführt. Die destillative Abtrennung des Alkohols wird vorzugsweise solange durchgeführt, bis im Kopf der Kolonne eine Temperatur erreicht ist, die der Siedetemperatur von Wasser entspricht.

Eine Einstellung des pH-Wertes im Reaktionsmedium kann durch Zugabe einer organischen oder anorganischen, insbesondere einer einwertigen Säure auch während und/oder nach der destillativen Abtrennung der Alkohole erfolgen.

Bei dem erfindungsgemäßen Verfahren wird der Restgehalt an Alkohol in den Organopolysiloxan-haltigen Zusammensetzungen vorzugsweise auf kleiner 2,0 Gew.-%, besonders vorzugsweise auf kleiner 0,5 Gew.-%, ganz besonders vorzugsweise auf kleiner 0,1 Gew.-%, eingestellt.

Zur Verminderung der Schaumbildung wird vor und/oder während der destillativen Abtrennung des Alkohols vorzugsweise ein Entschäumer, besonders vorzugsweise eine wäßrige Silikonharz-Suspension, zugesetzt.

Manchmal treten während oder nach Beendigung der Destillation im Produkt Trübungen oder Ausfällungen auf, diese rühren vielfach von dem zugesetzten Entschäumer her. Um ein klares Produkt zu erhalten, wird geeigneterweise das erhaltene Produkt nach der destillativen Abtrennung des Alkohols durch Sedimentation und/oder Filtration nachgereinigt. Die Filtration sowie die Entfernung des Sediments kann beispielsweise über eine Drucknutsche, einen Separator, einen Dekanter oder ähnliche Apparate erfolgen.

Nach dem erfindungsgemäßen Verfahren hergestellte Produkte sind stabile und klare Lösungen. Die erfindungsgemäßen Organopolysiloxan-haltigen Zusammensetzungen lassen sich mit Wasser in jedem Verhältnis verdünnen, entwickeln bei Wasserzugabe im wesentlichen keine Hydrolysealkohole, besitzen einen Flammpunkt von mehr als 80 °C, vorzugsweise von mehr als 95 °C, besonders vorzugsweise von mehr als 98 °C, und sind im wesentlichen frei von organischen Lösemitteln sowie Tensiden als Emulgatoren.

Die Verwendung der erfindungsgemäßen bzw. erfindungsgemäß hergestellten Produkte erfolgt mit hervorragenden Vorteilen gegenüber Produkten des relevanten Standes der Technik, wie durch die nachfolgenden Beispiele belegt wird.

Die vorliegende Erfindung wird durch die folgenden Beispiele näher erläutert:

**Beispiele**

Beschreibung der Reaktionsapparatur (für alle Beispiele gültig):

veresterungsapparatur: 0,5 l Laborrührreaktor, temperierbar (Innentemperaturmessung), Flüssigdosiereinrichtung, Rückflußkühler (Intensivkühler mit nachgeschaltetem Tiefkühler bis -40 °C), Stickstoffüberlagerung, Labordrucknutsche.

Hydrolyseapparatur: Laborrührkesselreaktor mit 2 l Inhalt, temperierbar, Innentemperaturmessung, Flüssigkeitsdosiereinrichtung, Destillationsbrücke mit Kopftemperaturmessung, Produktkühler, Destillatvorlagebehälter; Labordrucknutsche (2 l Inhalt).

Folgende Verfahrensparameter gelten für alle Beispiele:

Schäumungsprobleme während der Destillation können verhindert werden, indem der Reaktionslösung einige Tropfen eines handelsüblichen Entschäumers auf Basis wäßriger Silikonharzemulsionen zugesetzt werden. Die aus dem Zusatz von Entschäumer resultierende leichte Trübung kann durch Filtration über eine Drucknutsche mit Glasfaserfilter (Porenweite < 1 μm) entfernt werden.

Die in den Beispielen gewonnenen Produkte haben gemeinsam folgende Eigenschaften:

Das Produkt ist klar bis leicht opalisierend und in jedem Verhältnis mit Wasser mischbar. Der Gehalt an Alkoholen (Summe aus freien Alkoholen und hydrolysierbaren Alkoholen) liegt bei weniger als 0,5 %. Der Flammpunkt der Siloxanlösung liegt bei Werten > 95 °C und sinkt nicht bei Verdünnen mit Wasser, da durch Hydrolyse keine Alkohole gebildet werden.

Beschreibung der Testmethoden für anwendungstechnische Untersuchungen:

Es wurde die Reduktion der Wasseraufnahme und die Eindringtiefe der hydrophobierten Probekörper bestimmt.

Probekörper aus Kalksandstein, Ziegel und Mörtel wurden dafür in die Organopolysiloxan-Zubereitungen vollständig eingetaucht. Nach einer Eintauchzeit von jeweils 60 Sekunden wurden die Probekörper herausgenommen und allseitig belüftet und für 2 Wochen bei einer Luftfeuchtigkeit von über 60 % relativer Feuchte gelagert.

Bestimmung der Wasseraufnahme:

Zur Bestimmung der Wasseraufnahme wurden jeweils die behandelten und zwei unbehandelte, zuvor unter Raumbedingungen gelagerte Probekörper ausgewogen und unter Wasser gelagert. Hierzu kamen behandelte und unbehandelte Probekörper getrennt in mit Leitungswasser befüllte Wannen. Der Wasserstand über den Probekörpern betrug ca. 4 cm.

Nach 24 Stunden wurde die Wasseraufnahme der Probekörper durch Differenzwägung bestimmt. Die Reduktion der Wasseraufnahme der hydrophobierten Probekörper bezieht sich jeweils auf den Mittelwert der Wasseraufnahme der unhydrophobierten Vergleichsproben. Im Anschluß daran erfolgte die Bestimmung der Eindringtiefe.

Bestimmung der Eindringtiefe:

Zur Bestimmung der Eindringtiefe wurden die behandelten Probekörper in zwei Teile geteilt und die frischen Bruchflächen jeweils in Wasser getaucht. Die durch das Imprägnierungsmittel hydrophobierte Schicht wird dabei von Wasser nicht benetzt und hebt sich vom dunkel gefärbten, nicht hydrophobierten und deshalb durch Wasser benetzten Bereich deutlich ab. Es wurde die Schichtdicke der hydrophoben Schicht gemessen.

**Beispiel 1:** Herstellung eines wasserlöslichen Cohydrolysates aus Aminopropyltriethoxysilan (AMEO), Propyltrichlorsilan (PTCS) und Dimethyldichlorsilan (DMDCS):

In der oben beschriebenen Veresterungsapparatur werden 38,7 g DMDCS und 53,3 g PTCS vorgelegt. Unter Rühren dosiert man innerhalb von 2 h 50,4 g Methanol zu. Die Sumpftemperatur beträgt hierbei ca. 60 °C. Im Anschluß wird unter Rückfluß 2 h HCl ausgetrieben. Zur Vervollständigung der Veresterungsreaktion wird das noch chlorsilanhaltige Rohprodukt mit einer 30 Gew.-% Natriummethylatlösung versetzt (ca. 39 g), bis das Esterrohprodukt einen pH-Wert von 7 bis 8 aufweist. Nach Filtration wird in die Hydrolyseapparatur überführt und nacheinander innerhalb von ca. 20 Minuten mit 132,6 g AMEO, 64,8 g Wasser und 29,5 g Ameisensäure versetzt. Die Reaktion ist exotherm, die Temperatur steigt auf ca. 60 °C, und die Lösung weist einen pH-Wert von ca. 4 bis 5 auf. Anschließend werden innerhalb von ca. 4 h bei einer Sumpftemperatur von 55 °C bei einem von 292 mbar auf 130 mbar fallenden Druck die entstehenden Hydrolysealkohole abdestilliert, wobei während der Destillation Wasser in dem Maße (bezogen auf Gewicht) zudosiert wird, wie Destillat entfernt wird (ca. 350 g). Danach verdünnt man das Produkt mit 713 g Wasser auf die anwendungsfertige Endkonzentration.

**Beispiel 2:** Herstellung eines wasserlöslichen Cohydrolysates aus Aminopropyltriethoxysilan (AMEO), Propyltrichlorsilan (PTCS), Isobutyltrichlorsilan (IBTCS), Octyltrichlorsilan (OCTCS) und Dimethyldichlorsilan (DMDCS)

In der oben beschriebenen Veresterungsapparatur werden 38,7 g DMDCS, 53,3 g PTCS, 57,5 g IBTCS und 14,9 g OCTCS vorgelegt. Unter Rühren dosiert man innerhalb von 2 h 86,7 g Methanol zu. Die Sumpftemperatur beträgt hierbei ca. 60 °C. Im Anschluß wird unter Rückfluß 2 h HCl ausgetrieben. Zur Vervollständigung der Veresterungsreaktion wird das noch chlorsilanhaltige Rohprodukt mit einer 30 Gew.-% Natriummethylatlösung versetzt (ca. 60 g), bis das Esterrohprodukt einen pH-Wert von 7 bis 8 aufweist. Nach Filtration wird in die Hydrolyseapparatur überführt und nacheinander innerhalb von ca. 20 Minuten mit 132,6 g AMEO, 84,2 g Wasser und 29,0 g Ameisensäure versetzt. Die Reaktion ist exotherm, die Temperatur steigt auf ca. 60 °C, und die Lösung weist einen pH-Wert von ca. 4 bis 5 auf. Anschließend werden innerhalb von ca. 4 h bei einer Sumpftemperatur von 55 °C bei einem von 292 mbar auf 130 mbar fallenden Druck die entstehenden Hydrolysealkohole abdestilliert, wobei während der Destillation Wasser in dem Maße zudosiert wird, wie Destillat entfernt wird (ca. 350 g). Danach verdünnt man das Produkt mit 1 032 g Wasser auf die anwendungsfertige Endkonzentration.

**Beispiel 3:** Herstellung eines wasserlöslichen Cohydrolysates aus Aminopropyltrichlorsilan (AMEO), Propyltrichlorsilan (PTCS), Propylmethyldichlorsilan (PMDCS) und Dimethyldichlorsilan (DMDCS)

In der oben beschriebenen Veresterungsapparatur werden 38,7 g DMDCS, 106,5 g PTCS und 47,1 g PMDCS vorgelegt. Unter Rühren dosiert man innerhalb von 2 h 101 g Methanol zu. Die Sumpftemperatur beträgt hierbei ca. 60 °C. Im Anschluß wird unter Rückfluß 2 h HCl ausgetrieben. Zur Vervollstandigung der Veresterungsreaktion wird das noch chlorsilanhaltige Rohprodukt mit einer 30 Gew.-% Natriummethylatlösung versetzt (ca. 35 g), bis das Esterrohprodukt einen pH-Wert von 7 bis 8 aufweist. Nach Filtration wird in die Hydrolyseapparatur überführt und nacheinander innerhalb von ca. 20 Minuten mit 265,2 g AMEO, 130 g Wasser und 55 g Ameisensäure versetzt. Die Reaktion ist exotherm, die Temperatur steigt auf ca. 60 °C, und die Lösung weist einen pH-Wert von ca. 4 bis 5 auf. Anschließend werden innerhalb von ca. 4 h bei einer Sumpftemperatur von 55 °C und bei einem von 292 mbar auf 130 mbar fallenden Druck die entstehenden Hydrolysealkohole abdestilliert, wobei während der Destillation Wasser in dem Maße zudosiert wird, wie Destillat entfernt wird (ca. 330 g). Danach verdünnt man das Produkt mit 1 750 g Wasser auf die anwendungsfertige Endkonzentration.

**Beispiel 4:** Verbesserung des Schäumungsverhaltens des Produktes aus Beispiel 1

Jeweils 100 ml des Produktes aus Beispiel 1 werden in zwei gleichartige, 250 ml fassende Flaschen gefüllt. Der einen Lösung fügt man unter Rühren 10 mg eines Entschäumers auf Silikonharzbasis zu. Beide Flaschen werden verschlossen und kräftig geschüttelt. Man stellt fest, daß beide Lösungen stark schäumen. Während jedoch der Schaum der unmodifizierten Lösung über mehr als 5 Minuten stabil ist, fällt der Schaum der mit Entschäumer versetzten Lösung nach wenigen Sekunden zusammen.

**Beispiel 5:** Anwendungstechnischer Test des Produktes aus Beispiel 1

Die Ergebnisse der anwendungstechnischen Untersuchungen des Produktes aus Beispiel 1 an Baustoffen sind in Tabelle 1 vorgestellt und denen des Vergleichsversuches gegenübergestellt. Das Ergebnis zeigt, daß das Produkt aus Beispiel 1 eine deutlich geringere Wasseraufnahme, d. h. eine deutlich verbesserte Hydrophobierung, bewirkt als das Produkt aus dem Vergleichsbeispiel. Darüber hinaus sind Produkte aus Beispiel 1 in der Lage, tiefer in Kalkstein und Mörtel einzudringen.

**Vergleichsbeispiel 1:** Herstellung eines wasserlöslichen Cohydrolysates aus AMEO und Propyltrimethoxysilan (PTMO) im molaren Verhältnis 1 : 1

In der oben beschriebenen Hydrolyseapparatur werden 221 g AMEO und 164 g PTMO gemischt und mit 54 g Wasser versetzt. Nach einer halben Stunde fügt man unter Rühren weitere 126 g Wasser innerhalb von 15 Minuten über die Dosiervorrichtung hinzu. Die Temperatur steigt hierbei von 20 °C auf ca. 57 °C. Innerhalb weiterer 15 Minuten wird über die Dosiervorrichtung 114 g HCl (32 Gew.-% in Wasser) unter Rühren zudosiert. Innerhalb von ca. 4 h wird bei einer Sumpftemperatur von bis zu 102 °C bei Normaldruck ein Ethanol/Methanol/Wasser-Gemisch abdestilliert, bis die Kopftemperatur ca. 100 °C beträgt und das Kopfprodukt nur noch Wasser enthält. Während der Destillation wird Wasser über die Dosiereinrichtung mengenmäßig in dem Maße dem Produkt zugeführt, wie Destillat mengenmäßig entfernt wird.

**Vergleichsbeispiel 2:** Anwendungstechnischer Test des Produktes aus dem Vergleichsbeispiel 1

Die Ergebnisse der anwendungstechnischen Untersuchungen der Produkte aus Beispiel 1 und Vergleichsbeispiel 1 sind in Tabelle 1 gegenübergestellt und im Beispiel 5 kommentiert.

Tabelle 1:

| Gegenüberstellung der Produkte aus Beispiel 1 und dem Vergleichsbeispiel 1 anhand anwendungstechnischer Tests | | | |
|---|---|---|---|
| Anwendungstechnischer Test des Produktes aus dem Beispiel 1: | | | |
| Baustoff | Tauchzeit (sec) | Reduktion der $H_2O$-Aufnahme (%) | Eindringtiefe (mm) |
| Kalksandstein | 60 | 95 | 2 |
| Ziegel | 60 | 92 | > 25 |
| Mörtel | 60 | 88 | 10 |
| Anwendungstechnischer Test des Produktes aus dem Vergleichsbeispiel 1: | | | |
| Baustoff | Tauchzeit (sec) | Reduktion der $H_2O$-Aufnahme (%) | Eindringtiefe (mm) |
| Kalksandstein | 60 | 80 | 1 |
| Ziegel | 60 | 14 | > 25 |
| Mörtel | 60 | 80 | 2 |

**Patentansprüche**

1. Wasserbasierende Organopolysiloxan-haltige Zusammensetzungen,
   die im wesentlichen frei von organischen Lösemitteln sind, einen Flammpunkt von mehr als 80 °C besitzen und bei Verdünnen mit Wasser im wesentlichen keine Alkohole durch Hydrolyse freisetzen, wobei der Alkohol-Gehalt in den Zusammensetzungen weniger als 2 Gew.-% beträgt, erhältlich durch

   - Mischen wasserlöslicher Aminoalkylalkoxysilane der allgemeinen Formel I

$$R - Si\,(R^1)_y\,(OR^{1*})_{3-y} \qquad (I)$$

   mit nicht wasserlöslichen Alkyltrialkoxysilanen der allgemeinen Formel II

$$R^2 - Si\,(OR^{1**})_3 \qquad (II)$$

   und/oder nicht wasserlöslichen Dialkyldialkoxysilanen der allgemeinen Formel III

$$AA' - Si(OR^{1***})_2 \tag{III}$$

und/oder Mischungen aus nicht wasserlöslichen Alkyltrialkoxysilanen und Dialkyldialkoxysilanen der allgemeinen Formeln II und III,

wobei R eine aminofunktionelle organische Gruppe der allgemeinen Formel IV

$$[Z_{(f+g+h)}]^{(f+g+h)-}[NH_{2+f}(CH_2)_b(NH_{g+1})_c(CH_2)_d(NH_{h+1})_e(CH_2)_i]^{(f+g+h)+} - \tag{IV},$$

worin $0 \le b \le 3$, $0 \le d \le 3$, $0 \le i \le 3$, $0 \le f \le 1$, $0 \le g \le 1$, $0 \le h \le 1$, $0 \le c \le 1$, $0 \le e \le 1$, $b + d + i \ne 0$, falls b=0 dann c = 0, falls d = 0 dann e = 0, falls i = 0 dann e = 0, falls d = i = 0 dann c = 0, und Z ein einwertiger anorganischer oder organischer Säure-Rest ist,

$R^1$, $R^{1*}$, $R^{1**}$ und $R^{1***}$ einen Methyl- oder Ethyl-Rest,
$R^2$ einen linearen oder cyclischen oder verzweigten Alkyl-Rest mit 1 bis 8 C-Atomen,
A einen unverzweigten oder verzweigte Alkyl-Rest mit 1 bis 3 C-Atomen und
A' einen unverzweigten oder verzweigte Alkyl-Rest mit 1 bis 3 C-Atomen darstellt und
$0 \le y \le 1$ ist,

- in dem molaren Verhältnis $0 < M/Q \le 2$,
  wobei Q die Summe der Molzahlen der Aminoalkylalkoxysilane der allgemeinen Formel I und M die Summe der Molzahlen der Alkyltrialkoxysilane der allgemeinen Formel II und der Dialkyldialkoxysilane der allgemeinen Formel III ist,

- Versetzen des Gemisches mit Wasser,

- Einstellen des pH-Wertes der Reaktionsmischung auf einen Wert zwischen 1 und 8 und

- Entfernen des bereits vorhandenen und/oder bei der Umsetzung entstandenen Alkohols.

**2.** Organopolysiloxan-haltige Zusammensetzungen nach Anspruch 1,
**dadurch gekennzeichnet, daß** diese einen pH-Wert zwischen 1 und 8 aufweisen.

**3.** Organopolysiloxan-haltige Zusammensetzungen nach den Ansprüchen 1 und 2
**dadurch gekennzeichnet, daß** diese eine einwertige anorganische und/oder organische Säure und/oder deren Folgeprodukte enthalten.

**4.** Organopolysiloxan-haltige Zusammensetzungen nach den Ansprüchen 1 bis 3,
**dadurch gekennzeichnet,**
**daß** diese eine Silikonharz-Suspension enthalten.

**5.** Verfahren zur Herstellung von Organopolysiloxan-haltigen Zusammensetzungen nach den Ansprüchen 1 bis 4,
**dadurch gekennzeichnet,**
**daß** man

- wasserlösliche Aminoalkylalkoxysilane der allgemeinen Formel I

$$R - Si(R^1)_y(OR^{1*})_{3-y} \tag{I}$$

mit nicht wasserlöslichen Alkyltrialkoxysilane der allgemeinen Formel II

$$R^2 - Si(OR^{1**})_3 \tag{II},$$

und/oder nicht wasserlöslichen Dialkyldialkoxysilanen der allgemeinen Formel III

$$\text{AA' - Si (OR}^{1***})_2 \qquad\qquad \text{(III)}$$

und/oder Mischungen aus nicht wasserlöslichen Alkyltrialkoxysilanen und Dialkyldialkoxysilanen der allgemeinen Formeln II und III,
   wobei R eine aminofunktionelle organische Gruppe der allgemeinen Formel IV

$$[Z_{(f+g+h)}]^{(f+g+h)-}[NH_{2+f}(CH_2)_b(NH_{g+1})_c(CH_2)_d(NH_{h+1})_e(CH_2)_i]^{(f+g+h)+} - \qquad\qquad \text{(IV)},$$

   worin $0 \leq b \leq 3$, $0 \leq d \leq 3$, $0 \leq i \leq 3$, $0 \leq f \leq 1$, $0 \leq g \leq 1$, $0 \leq h \leq 1$, $0 \leq c \leq 1$, $0 \leq e \leq 1$, $b + d + i \neq 0$, falls b = 0 dann c = 0, falls d = 0 dann e = 0, falls i = 0 dann e = 0, falls d = i = 0 dann c = 0, und Z ein einwertiger anorganischer oder organischer Säure-Rest ist,

   $R^1$, $R^{1*}$, $R^{1**}$ und $R^{1***}$ einen Methyl- oder Ethyl-Rest,
   $R^2$ einen linearen oder cyclischen oder verzweigten Alkyl-Rest mi 1 bis 8 C-Atomen,
   A einen unverzweigten oder verzweigte Alkyl-Rest mit 1 bis 3 C-Atomen und
   A' einen unverzweigten oder verzweigte Alkyl-Rest mit 1 bis 3 C-Atomen darstellt und
   $0 \leq y \leq 1$ ist,

- in dem molaren Verhältnis $0 < M/Q \leq 2$ mischt,
   wobei Q die Summe der Molzahlen der Aminoalkylalkoxysilane der allgemeinen Formel I und M die Summe der Molzahlen der Alkyltrialkoxysilane der allgemeinen Formel II und der Dialkyldlalkoxysilane der allgemeinen Formel III ist,

- das Gemisch mit Wasser versetzt,

- den pH-Wert der Reaktionsmischung auf einen Wert zwischen 1 und 8 einstellt,

- den bereits vorhandenen und/oder bei der Umsetzung entstandenen Alkohol entfernt.

6. Verfahren nach Anspruch 5,
   **dadurch gekennzeichnet,**
   **daß** Mischungen aus Alkyltrialkoxysilanen der allgemeinen Formel II und Dialkyldialkoxysilanen der allgemeinen Formel III durch gleichzeltige Veresterung der entsprechenden Tri- und Dichlorsilane der allgemeinen Formeln V und VI

$$R^2 \text{ - Si Cl}_3 \qquad\qquad \text{(V)}$$

$$\text{AA' - Si Cl}_2 \qquad\qquad \text{(VI)},$$

   wobei $R^2$ einen linearen oder cyclischen oder verzweigten Alkyl-Rest mit 1 bis 8 C-Atomen, A einen unverzweigten oder verzweigte Alkyl- Rest mit 1 bis 3 C-Atomen und A' einen unverzweigten oder verzweigten Alkyl-Rest mit 1 bis 3 C-Atomen darstellt,
   mit Methanol oder Ethanol hergestellt werden.

7. Verfahren nach den Ansprüchen 5 und 6,
   **dadurch gekennzeichnet,**
   **daß** das Reaktionsgemisch mit 0,5 bis 10 Molen Wasser pro Mol der eingesetzten Aminoalkylalkoxysilane der allgemeinen Formel I, der Alkyltrialkoxysilane der allgemeinen Formeln II und/oder der Dialkyldialkoxysilane der allgemeinen Formel III versetzt wird.

8. Verfahren nach den Ansprüchen 5 bis 7,
   **dadurch gekennzeichnet,**
   **daß** dem Reaktionsgemisch eine einbasige Säure zugegeben wird.

**9.** Verfahren nach den Ansprüchen 5 bis 8,
**dadurch gekennzeichnet,**
**daß** die Umsetzung in einem Temperaturbereich zwischen 0 und 100 °C durchgeführt wird.

**10.** Verfahren nach den Ansprüchen 5 bis 9,
**dadurch gekennzeichnet,**
**daß** man bereits vorhandenen und/oder bei der Umsetzung entstandenen Alkohol destillativ entfernt und dabei gleichzeitig Wasser in dem Maße zugibt, wie Alkohol aus dem Reaktionsmedium entfernt wird.

**11.** Verfahren nach den Ansprüchen 5 bis 10,
**dadurch gekennzeichnet,**
**daß** die destillative Abtrennung des Alkohols unter vermindertem Druck durchgeführt wird.

**12.** Verfahren nach den Ansprüchen 5 bis 11,
**dadurch gekennzeichnet,**
**daß** die destillative Abtrennung des Alkohols solange durchgeführt wird, bis im Kopf der Kolonne eine Temperatur erreicht ist, die der Siedetemperatur von Wasser entspricht.

**13.** Verfahren nach den Ansprüchen 5 bis 12,
**dadurch gekennzeichnet,**
**daß** zur Verminderung der Schaumbildung vor und/oder während der destillativen Abtrennung des Alkohols ein Entschäumer zugesetzt wird.

**14.** Verfahren nach den Ansprüchen 5 bis 13,
**dadurch gekennzeichnet,**
**daß** der Restgehalt an Alkohol in den Organopolysiloxan-haltigen Zusammensetzungen auf < 2 Gew.-% eingestellt wird.

**15.** Verfahren nach den Ansprüchen 5 bis 14,
**dadurch gekennzeichnet,**
**daß** das erhaltene Produkt nach der destillativen Abtrennung des Alkohols durch Sedimentation und/oder Filtration nachgereinigt wird.

**16.** Verwendung der Organopolysiloxan-haltigen Zusammensetzungen auf Wasser-Basis nach den Ansprüchen 1 bis 15

für die Hydrophobierung von Oberflächen,
für die Hydrophobierung von mineralischen Baustoffen,
für den Schutz von Bauten und Fassaden,
für die Beschichtung von Glasfasern,
für die Silanierung von Füllstoffen,
für die Verbesserung der rheologischen Eigenschaften von Dispersionen und Emulsionen,
für die Hydrophobierung von Textilien, Leder, Zellulose- und Stärkeprodukte,
als Haftvermittler für die Verbesserung der Haftung organischer Polymerer auf anorganischen Oberflächen,
als Trennmittel,
als Vernetzer,
als Zusatzstoffe für Farben und Lacke.

**Claims**

**1.** A water-based organopolysiloxane-containing composition which is substantially free from organic solvents, has a flashpoint of more than 80°C and liberates substantially no alcohol by hydrolysis on dilution with water, the alcohol content in the composition being less than 2% by weight, obtainable by

- mixing water-soluble aminoalkylalkoxysilanes of the general formula I

$$R\text{-}Si(R^1)_y(OR^{1*})_{3-y} \qquad\qquad\qquad (I)$$

with alkyltrialkoxysilanes which are not water-soluble, of the general formula II

$$R^2\text{-}Si(OR^{1**})_3 \qquad\qquad\qquad (II)$$

and/or dialkyldialkoxysilanes which are not water-soluble, of the general formula III

$$AA'\text{-}Si(OR^{1***})_2 \qquad\qquad\qquad (III)$$

and/or mixtures of alkyltrialkoxysilanes and dialkyldialkoxysilanes which are not water-soluble, of the general formulae II and III,
wherein R is an amino-functional organic group of the general formula IV

$$[Z_{(f+g+h)}]^{(f+g+h)-}[NH_{2+f}(CH_2)_b(NH_{g+1})_c(CH_2)_d(NH_{h+1})_e(CH_2)_i]$$

$$^{(f+g+h)+} \qquad\qquad\qquad\qquad (IV),$$

where $0 \le b \le 3$, $0 \le d \le 3$, $0 \le i \le 3$, $0 \le f \le 1$, $0 \le g \le 1$, $0 \le h \le 1$, $0 \le c \le 1$, $0 \le e \le 1$, $b + d + i \ne 0$, if b = 0 then c = 0, if d = 0 then e = 0, if i = 0 then e = 0, if d = i = 0 then c = 0, and Z is a monobasic inorganic or organic acid radical,

$R^1$, $R^{1*}$, $R^{1**}$ and $R^{1***}$ are a methyl or ethyl radical,
$R^2$ is a linear or cyclic or branched alkyl radical having 1 to 8 C atoms,
A is an unbranched or branched alkyl radical having 1 to 3 C atoms and
A' is an unbranched or branched alkyl radical having 1 to 3 C atoms and
$0 \le y \le 1$

- in the molar ratio $0 < M/Q \le 2$.
  wherein Q is the sum of the numbers of moles of the aminoalkylalkoxysilanes of the general formula I and M is the sum of the numbers of moles of the alkyltrialkoxysilanes of the general formula II and of the dialkyldialkoxysilanes of the general formula III,

- adding water to the mixture,

- adjusting the pH of the reaction mixture to a value of from 1 to 8 and

- removing the alcohol already present and/or formed during the reaction.

2. An organopolysiloxane-containing composition according to claim 1, **characterized in that** this has a pH of from 1 to 8.

3. An organopolysiloxane-containing composition according to either of claims 1 and 2, **characterized in that** this comprises a monobasic inorganic and/or organic acid and/or secondary products thereof.

4. An organopolysiloxane-containing composition according to any of claims 1 to 3, **characterized in that** this comprises a silicone resin suspension.

5. A process for the preparation of an organopolysiloxane-containing composition according to any of claims 1 to 4, **characterized in that**

- water-soluble aminoalkylalkoxysilanes of the general formula I

$$\text{R-Si } (R^1)_y(OR^{1*})_{3-y} \qquad\qquad (I)$$

are mixed with alkyltrialkoxysilanes which are not water-soluble, of the general formula II

$$R^2\text{-Si } (OR^{1**})_3 \qquad\qquad (II)$$

and/or dialkyldialkoxysilanes which are not water-soluble, of the general formula III

$$AA'\text{ -Si } (OR^{1***})_2 \qquad\qquad (III)$$

and/or mixtures of alkyltrialkoxysilanes and dialkyldialkoxysilanes which are not water-soluble, of the general formulae II and III,

wherein R is an amino-functional organic group of the general formula IV

$$[Z_{(f+g+h)}]^{(f+g+h)-}[NH_{2+f}(CH_2)_b(NH_{g+1})_c(CH_2)_d(NH_{h+1})_e\ (CH_2)_i]^{(f+g+h)+} - \qquad (IV),$$

where $0 \leq b \leq 3$, $0 \leq d \leq 3$, $0 \leq i \leq 3$, $0 \leq f \leq 1$, $0 \leq g \leq 1$, $0 \leq h \leq 1$, $0 \leq c \leq 1$, $0 \leq e \leq 1$, $b + d + i \neq 0$, if b = 0 then c = 0, if d = 0 then e = 0, if i = 0 then e = 0, if d = i = 0 then c = 0, and Z is a monobasic inorganic or organic acid radical,

$R^1$, $R^{1*}$, $R^{1**}$ and $R^{1***}$ are a methyl or ethyl radical,
$R^2$ is a linear or cyclic or branched alkyl radical having 1 to 8 C atoms,
A is an unbranched or branched alkyl radical having 1 to 3 C atoms and
A' is an unbranched or branched alkyl radical having 1 to 3 C atoms and
$0 \leq y \leq 1$

- in the molar ratio $0 < M/Q \leq 2$.
  wherein Q is the sum of the numbers of moles of the aminoalkylalkoxysilanes of the general formula I and M is the sum of the numbers of moles of the alkyltrialkoxysilanes of the general formula II and of the dialkyldialkoxysilanes of the general formula III,

- water is added to the mixture,

- the pH of the reaction mixture is adjusted to a value of from 1 to 8 and

- the alcohol already present and/or formed during the reaction is removed.

6. A process according to claim 5, **characterized in that** mixtures of alkyltrialkoxysilanes of the general formula II and dialkyldialkoxysilanes of the general formula III are prepared by simultaneous esterification of the corresponding tri- and dichlorosilanes of the general formulae V and VI

$$R^2\text{-SiCl}_3 \qquad\qquad (V)$$

$$AA'\text{-SiCl}_2 \qquad\qquad (VI)$$

wherein $R^2$ is a linear or cyclic or branched alkyl radical having 1 to 8 C atoms, A is an unbranched or branched alkyl radical having 1 to 3 C atoms and A' is an unbranched or branched alkyl radical having 1 to 3 C atoms, with methanol or ethanol.

7. A process according to either of claims 5 and 6, **characterized in that** 0.5 to 10 mol of water per mole of the aminoalkylalkoxysilanes of the general formula I employed, of the alkyltrialkoxysilanes of the general formula II and/or of the dialkyldialkoxysilanes of the general formula III are added to the reaction mixture.

8. A process according to any of claims 5 to 7, **characterized in that** a monobasic acid is added to the reaction mixture.

9. A process according to any of claims 5 to 8, **characterized in that** the reaction is carried out in a temperature range from 0 to 100°C.

10. A process according to any of claims 5 to 9, **characterized in that** the alcohol already present and/or formed during the reaction is removed by distillation, and during this operation water is simultaneously added at the rate at which the alcohol is removed from the reaction medium.

11. A process according to any of claims 5 to 10, **characterized in that** the removal of the alcohol by distillation is carried out under reduced pressure.

12. A process according to any of claims 5 to 11, **characterized in that** the removal of the alcohol by distillation is carried out until a temperature which corresponds to the boiling point of water is reached in the top of the column.

13. A process according to any of claims 5 to 12, **characterized in that** a defoamer is added before and/or during the removal of the alcohol by distillation to prevent foam formation.

14. A process according to any of claims 5 to 13, **characterized in that** the residual content of alcohol in the organopolysiloxane-containing compositions is adjusted to < 2% by weight.

15. A process according to any of claims 5 to 14, **characterized in that** the resulting product is supplementarily purified by sedimentation and/or filtration after the removal of the alcohol by distillation.

16. The use of the organopolysiloxane-containing composition based on water according to any of Claims 1 to 15

    for hydrophobicizing surfaces,
    for hydrophobicizing mineral building materials,
    for protecting buildings and facades,
    for coating glass fibres,
    for silanizing fillers,
    for improving the rheological properties of dispersions and emulsions,
    for hydrophobicizing textiles, leather and cellulose and starch products,
    as adhesion promoters for improving the adhesion of organic polymers to inorganic surfaces,
    as release agents,
    as crosslinking agents
    and as additives for paints and varnishes.

**Revendications**

1. Compositions à base aqueuse contenant des organopolysiloxanes, qui sont essentiellement dépourvues de solvants organiques, qui possèdent un point d'inflammation supérieur à 80°C et qui en cas de dilution avec de l'eau ne libèrent pour l'essentiel pas d'alcool par hydrolyse, la teneur en alcool dans les compositions étant inférieure à 2 % en poids, que l'on peut obtenir par

- mélange d'aminoalkylalcoxysilanes solubles dans l'eau, de formule générale I

$$R - Si(R^1)_y(OR^{1*})_{3-y} \qquad\qquad (I)$$

avec des alkyltrialcoxysilanes non solubles dans l'eau, de formule générale II

$$R^2 - Si - (OR^{1**})_3 \qquad\qquad (II)$$

et/ou des dialkyldialcoxysilanes non solubles dans l'eau, de formule générale III

$$AA' - Si (OR^{1***})_2 \qquad\qquad (III)$$

et/ou des mélanges d'alkyltrialcoxysilanes et de dialkyldialcoxysilanes non solubles dans l'eau, de formules générales II et III,
dans lesquelles R est un groupe organique amino-fonctionnel de formule générale IV

$$[Z_{f+g+h)}]^{(f+g+h)-}[NH_{2+f}(CH_2)_b(NH_{g+1})_c(CH_2)_d(NH_{h+1})_e(CH_2)_f(CH_2)_i]^{(f+g+h)+} - \qquad (IV)$$

dans laquelle $0 \leq b \leq 3$, $0 \leq d \leq 3$, $0 \leq i \leq 3$, $0 \leq f \leq 1$, $0 \leq g \leq 1$, $0 \leq h \leq 1$, $0 \leq c \leq 1$, $0 \leq e \leq 1$, $b + d + i \neq 0$, si $b = 0$ alors $c = 0$, si $d = 0$ alors $e = 0$, si $i = 0$ alors $e = 0$, si $d = i = 0$ alors $c = 0$, et Z est un radical acide inorganique ou organique monovalent,

$R^1$, $R^{1*}$, $R^{1**}$ et $R^{1***}$ représentent un radical méthyle ou éthyle,
$R^2$ représente un radical alkyle linéaire, cyclique ou ramifié comportant de 1 à 8 atomes de carbone,
A représente un radical allyle non ramifié ou ramifié comportant de 1 à 3 atomes de carbone et
A' représente un radical alkyle non ramifié ou ramifié comportant de 1 à 3 atomes de carbone et
$0 \leq y \leq 1$,

- dans un rapport molaire $0 < M/Q \leq 2$,
  où Q est la somme des nombres molaires des aminoalkylalcoxysilanes de formule générale I et M est la somme des nombres molaires des alkyltrialcoxysilanes de formule générale II et des dialkyldialcoxysilanes de formule générale III,

  - mélange du mélange avec de l'eau,
  - réglage du pH du mélange réactionnel à une valeur comprise entre 1 et 8 et
  - élimination de l'alcool déjà présent et/ou apparu lors de la réaction.

2. Compositions contenant des organopolysiloxanes selon la revendication 1,
   **caractérisées en ce qu'**
   elles présentent un pH compris entre 1 et 8.

3. Compositions contenant des organopolysiloxanes selon les revendications 1 et 2,
   **caractérisées en ce qu'**
   elles contiennent un acide inorganique et/ou organique monovalent et/ou ses dérivés.

4. Compositions contenant des organopolysiloxanes selon les revendications 1 à 3,
   **caractérisées en ce qu'**
   elles contiennent une suspension de résine de silicone.

5. Procédé de production de compositions contenant des organopolysiloxanes selon les revendications 1 à 4,
   **caractérisé en ce qu'**

   - on mélange des aminoalkylalcoxysilanes solubles dans l'eau, de formule générale I

$$R - Si (R^1)_y (OR^{1*})_{3-y} \qquad\qquad (I)$$

avec des alkyltrialcoxysilanes non solubles dans l'eau, de formule générale II

$$R^2 - Si - (OR^{1**})_3 \qquad (II)$$

et/ou des dialkyldialcoxysilanes non solubles dans l'eau, de formule générale III

$$AA' - Si (OR^{1***})_2 \qquad (III)$$

et/ou des mélanges d'alkyltrialcoxysilanes et de dialkyidialcoxysilanes non solubles dans l'eau, de formules générales II et III,
dans lesquelles R est un groupe organique amine-fonctionnel de formule générale IV

$$[Z_{f+g+h}]^{(f+g+h)-}[NH_{2+f}(CH_2)_b(NH_{g+1})_c(CH_2)_d(NH_{h+1})_e(CH_2)_i]^{(f+g+h)+} - \qquad (IV)$$

dans laquelle $0 \leq b \leq 3$, $0 \leq d \leq 3$, $0 \leq i \leq 3$, $0 \leq f \leq 1$, $0 \leq g \leq 1$, $0 \leq h \leq 1$, $0 \leq c \leq 1$, $0 \leq e \leq 1$, $b + d + i \neq 0$, si $b = 0$ alors $c = 0$, si $d = 0$ alors $e = 0$ si $i = 0$ alors $e = 0$, si $d = i = 0$ alors $c = 0$, et Z est un radical acide inorganique ou organique monovalent,

$R^1$, $R^{1*}$, $R^{1**}$ et $R^{1***}$ représentent un radical méthyle ou éthyle,
$R^2$ représente un radical alkyle linéaire, cyclique ou ramifié comportant de 1 à 8 atomes de carbone,
A représente un radical alkyle non ramifié ou ramifié comportant de 1 à 3 atomes de carbone et
A' représente un radical alkyle non ramifié ou ramifié comportant de 1 à 3 atomes de carbone et
$0 \leq y \leq 1$,

- dans un rapport molaire $0 < M/Q \leq 2$,

où Q est la somme des nombres molaires des aminoalkylalcoxysilanes de formule générale I et M est la somme des nombres molaires des alkyltrialcoxysilanes de formule générale II et des dialkyldialcoxysilanes de formule générale III,

- on mélange le mélange avec de l'eau,
- on règle du pH du mélange réactionnel à une valeur comprise entre 1 et 8 et
- on élimine l'alcool déjà présent et/ou apparu lors de la réaction.

6. Procédé selon la revendication 5,
**caractérisé en ce qu'**
on prépare des mélanges d'alkyltrialcoxysilanes de formule générale II et de dialkyldialcoxysilanes de formule générale III par estérification simultanée des tri- et dichlorosilanes correspondants de formules générales V et VI

$$R^2 - Si\ Cl_3 \qquad (V)$$

$$AA' - Si\ Cl_2 \qquad (VI),$$

dans lesquelles $R^2$ représente un radical alkyle linéaire, cyclique ou ramifié comportant de 1 à 8 atomes de carbone, A représente un radical alkyle non ramifié ou ramifié comportant de 1 à 3 atomes de carbone et A' représente un radical alkyle non ramifié ou ramifié comportant de 1 à 3 atomes de carbone,
avec du méthanol ou de l'éthanol.

7. Procédé selon les revendications 5 et 6,
**caractérisé en ce qu'**
on mélange le mélange réactionnel avec de 0,5 à 10 moles d'eau par mole d'aminoalkylalcoxysilanes de formule générale I, d'alkyltri-alcoxysilanes de formule générale II et/ou de dialkyldialcoxysilanes de formule générale III utilisés.

**8.** Procédé selon les revendicatiosns 5 à 7,
**caractérisé en ce qu'**
on ajoute au mélange réactionnel un acide monobasique.

**9.** Procédé selon les revendications 5 à 8,
**caractérisé en ce qu'**
on conduit la réaction dans un intervalle de température compris entre 0 et 100°C.

**10.** Procédé selon les revendications 5 à 9,
**caractérisé en ce qu'**
on élimine par distillation l'alcool déjà présent et/ou apparu lors de la réaction, et qu'alors, on ajoute simultanément de l'eau dans la mesure où l'on retire l'alcool du mélange réactionnel.

**11.** Procédé selon les revendications 5 à 10,
**caractérisé en ce qu'**
on procède à la séparation de l'alcool par distillation à pression réduite.

**12.** Procédé selon les revendications 5 à 11,
**caractérisé en ce qu'**
on procède à la séparation de l'alcool par distillation jusqu'à ce qu'on atteigne dans la tête de la colonne une température qui correspond à la température d'ébullition de l'eau.

**13.** Procédé selon les revendications 5 à 12,
**caractérisé en ce que**
pour diminuer la formation de mousse et/ou au cours de la séparation de l'alcool par distillation on ajoute un anti-mousse.

**14.** Procédé selon les revendications 5 à 13,
**caractérisé en ce que**
dans les compositions contenant des organopolysiloxanes est réglée la teneur résiduelle en alcool < 2 % en poids.

**15.** Procédé selon les revendications 5 à 14,
**caractérisé en ce qu'**
on purifie le produit obtenu après séparation de l'alcool par sédimentation et/ou filtration.

**16.** Utilisation des compositions à base aqueuse contenant des organopolysiloxanes selon les revendications 1 à 15,

   pour rendre hydrophobes des surfaces,
   pour rendre hydrophobes des matériaux de construction minéraux,
   pour protéger les bâtiments et les façades,
   pour revêtir les fibres de verre,
   pour silaniser les matériaux de remplissage,
   pour améliorer les propriétés rhéologiques de dispersions et d'émulsions,
   pour rendre hydrophobes les textiles, le cuir, les produits cellulosiques et d'amidon,
   comme tiers adhésif pour améliorer l'adhérence des polymères organiques sur les surfaces inorganiques,
   comme agents séparateurs,
   comme agents réticulants,
   comme additifs pour les colorants et les vernis.